# EUROPEAN PATENT APPLICATION

(11) **EP 1 729 419 A1**
(43) Date of publication of application: **06.12.2006**
(21) Application number: 05720414.1
(22) Date of filing: 03.03.2005
(51) Int. Cl.: H03M 1/10, B62D 5/04, B62D 6/00, B62D 101/00, B62D 119/00

(54) **CONTROL APPARATUS OF ELECTRICALLY DRIVEN POWER STEERING APPARATUS**

(30) Priority: 05.03.2004 JP 2004062074
(71) Applicant: NSK LTD., Shinagawa-ku, Tokyo 141-8560 (JP); NSK Steering Systems Co. Ltd, Shinagawa-ku, Tokyo 141-8560 (JP)
(72) Inventor: FUKUDA, Masahiro, Maebashi-Shi, Gunma 3710845 5 (JP)
(74) Representative: Hooiveld, Arjen Jan Winfried
(86) International application number: PCT/JP2005/004143
(87) International publication number: WO 2005/086355

(57) **Abstract**

A controller of an electrically driven power steering apparatus that can be realized by using a low-cost structure to perform a fault diagnosis of A/D converters and that can determine a fault part, for example, which one of the A/D converters is in a fault state to determine whether the application of a steering assist force should be stopped or continued, with the result that the fault diagnosis places no excessive load on a main MCU. A main MCU with an A/D converter (1), a sub MCU with an A/D converter (2), and a D/A converter are provided. The sub MCU outputs a predetermined value to a D/A converter. An error between a predetermined value and a return value (1) obtained by transmitting a predetermined value to the sub MCU through a D/A converter and A/D converter (1) are compared in the sub MCU. An error between a predetermined value and a return value (2) obtained by transmitting a predetermined value to the sub MCU through a D/A converter and A/D converter (2) are compared in the sub MCU to perform the fault diagnosis.

## Description

### TECHNICAL FIELD

The present invention relates to a controller for an electric power steering apparatus, and more particularly to a controller for an electric power steering apparatus wherein the controller can perform a fault diagnosis of an A/D converter and a D/A converter, which are used in the controller.

### BACKGROUND TECHNIQUE

An electric power steering apparatus, which urges a steering apparatus of an automobile or a vehicle by means of a rotational force of a motor, imparts a driving force of the motor to a steering shaft or a rack axis through a transmission mechanism such as gears or a belt through reduction gears. Such a conventional electric power steering apparatus carries out a feedback control of a motor current in order to accurately generate an assist torque (a steering assist torque). The feedback control is to adjust a motor applied voltage to reduce the difference between a current command value and a motor current detection value. The motor applied voltage is typically adjusted based on a duty ratio of a pulse width modulation (PWM) control.

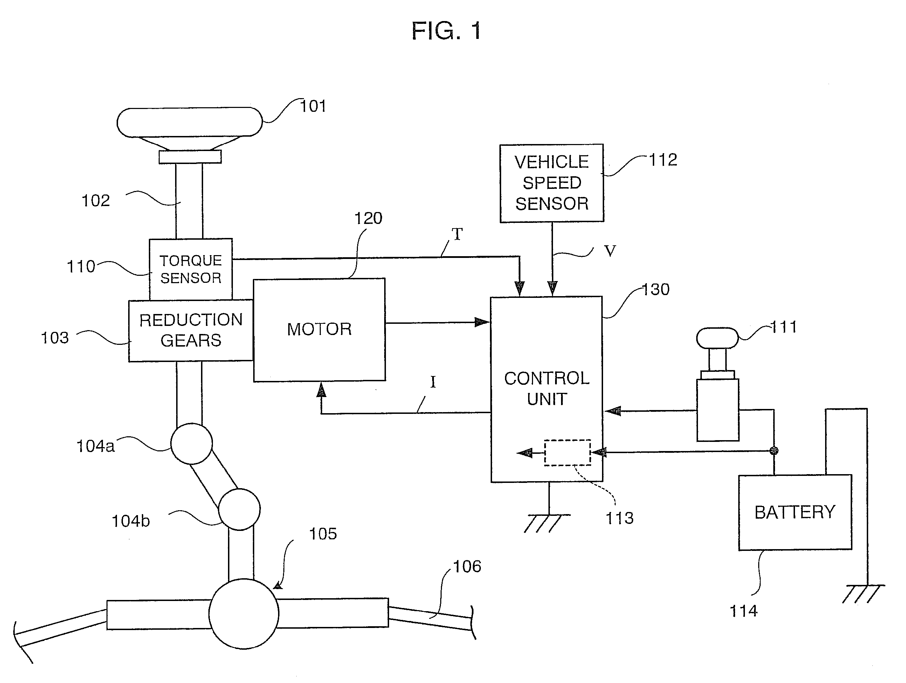

A general structure of an electric power steering apparatus will now be described with reference to FIG. 1. A column shaft 102 of a steering wheel 101 is connected to a tie rod 106 of running wheels through reduction gears 103, universal joints 104a and 104b, and a pinion rack mechanism 105. The column shaft 102 is provided with a torque sensor 110 for detecting a steering torque of the steering wheel 101. A motor 120 for assisting the steering force of a steering wheel 101 is connected to a column shaft 102 through the reduction gears 103. A control unit 130 for controlling the power steering apparatus is supplied with power from a battery 114 through an inner power relay 113 and with an ignition signal from an ignition key 111. A control unit 130 calculates a steering auxiliary command value I of an assist command based on a steering torque T detected by a torque sensor 110 and a vehicle speed V detected by a vehicle speed sensor 112. A control unit 130 then controls a current to be supplied to the motor 120 based on the calculated steering auxiliary command value I.

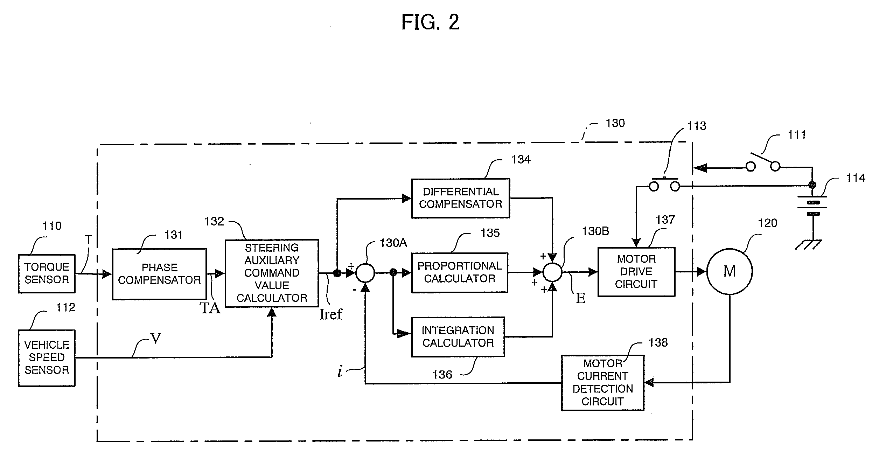

The control unit 130 is mainly comprised of a CPU (Central Processing Unit)(or an MPU (Micro Processor Unit)). General functions to be executed based on a program inside the CPU are as shown in FIG. 2. For example, a phase compensator 131 does not represent a phase compensator as independent hardware, but represents a phase compensation function carried out by the CPU.

Functions and operations of the control unit 130 will be described below with reference to FIG. 2. A steering torque T detected and supplied by the torque sensor 110 is phase-compensated by a phase compensator 131 for increasing the stability of a steering system. Phase-compensated steering torque TA is then inputted to a steering auxiliary command value calculator 132. Further, the vehicle speed V detected by the vehicle speed sensor 112 is also inputted to the steering auxiliary command value calculator 132. Based on the inputted steering torque TA and the inputted vehicle speed V, the steering auxiliary command value calculator 132 determines a steering auxiliary command value I_{ref} as a control target value of a current to be supplied to the motor 120. The steering auxiliary command value I_{ref} is inputted to a subtractor 130A, and is also inputted to a differential compensator 134 of a feed-forward system for increasing a response speed. An error (I_{ref}-i) calculated by the subtractor 130A is inputted to a proportional calculator 135 and is also inputted to an integration calculator 136 for improving the characteristics of the feedback system. A proportional output from the proportional calculator 135 and outputs from the differential compensator 134 and the integration calculator 136 are also inputted to and added together by an adder 130B. A current command value E, which is a result of the addition by the adder 130B, is inputted to a motor drive circuit 137 as a motor driving signal. A motor current value "i" of the motor 120 is detected by a motor current detection circuit 138, and the detected motor current value "i" is inputted to a subtractor 130A and is feedbacked.

In addition, the power from a battery 114 is supplied to the motor drive circuit 137 through a power relay 113 and an ignition key signal from an ignition key 111 is inputted to the control unit 130.

In the electric power steering apparatus as described above, the control unit 130 operates mainly based on the functions of the CPU. The control unit 130, however, operates also based on hardware elements such as an A/D converter and D/A converter used for data conversion. In order to ensure normal or regular operations of the electric power steering apparatus, not only the CPU but also the A/D converter and the D/A converter should operate properly. Some electric power steering apparatuses perform a fault diagnosis for determining whether or not an A/D converter and a D/A converter operate normally. For example, Japanese Patent Application Laid-open No. 10(1998)-211885 A (Patent Reference 1) discloses providing a dual control section formed by a steering controller and an auxiliary controller, performing the fault diagnosis of the steering controller, including an A/D converter and a D/A converter, and if the steering controller is faulty, changing the steering controller to an auxiliary controller and thereby continuing the control operations.

Since the electric power steering apparatus that performs the fault diagnosis as described in the Patent Reference 1 mentioned above employs a system of dual controllers each comprising a CPU and the like, it involves a problem that the cost of the apparatus increases. Furthermore, another problem lies in that it is impossible to identify a fault part, i.e., to identify which an A/D converter, which a D/A converter, or which a steering sensor is faulty. In addition, there is another problem that when the main CPU or any port of the A/D converter associated with the main CPU is used for such the fault diagnosis, the fault diagnosis places excessive load on the main CPU or the A/D converter associated with the main CPU, which adversely affects a proper control by the electric power steering apparatus.

The present invention was made in view of the aforementioned circumstances, and the object of the present invention is to provide a controller for an electric power steering apparatus, wherein the controller can make the fault diagnosis of an A/D converter and a D/A converter by using a low-cost apparatus structure; can identify a faulty part, i.e., identify which an A/D converter, which a D/A converter, or which an external sensor is faulty so as to determine whether the application of a steering assist force should be stopped or continued; and can provide the fault diagnosis wherein no excessive load is placed on a main MCU (Micro Controller Unit).

### DISCLOSURE OF THE INVENTION

The present invention relates to a controller for an electric power steering apparatus applying a steering assist force by a motor to a steering system of a vehicle. The foregoing objects are achieved by such a controller comprising a main MCU with an A/D converter (1), a sub MCU with an A/D converter (2), and a D/A converter, wherein the sub MCU outputs a predetermined value to a D/A converter, an error between a predetermined value and a return value (1) obtained by transmitting a predetermined value to the sub MCU through the D/A converter and the A/D converter (1) are compared in the sub MCU, while an error between a predetermined value and a return value (2) obtained by transmitting a predetermined value to the sub MCU through the D/A converter and the A/D converter (2) are compared in the sub MCU, based on which a fault diagnosis is performed on the A/D converter (1), the A/D converter (2) and the D/A converter.

### BRIREF DESCRIPTION OF THE DRAWINGS

FIG. 1 shows a diagram showing a structure of a conventional electric power steering apparatus;
FIG. 2 is a block diagram for illustrating a typical configuration example of a controller for such an electric power steering apparatus;
FIG. 3 shows a block configuration diagram of an embodiment of the present invention;
FIG. 4 is a functional block diagram showing the functions of the embodiment of the present invention;
FIG. 5 is a flowchart showing an operation example of a fault determination on an A/D converter of a main MCU; and
FIG. 6 is a flowchart showing an operation example of a fault determination on an A/D converter of a sub MCU.

### BEST MODE FOR CARRYING OUT THE INVENTION

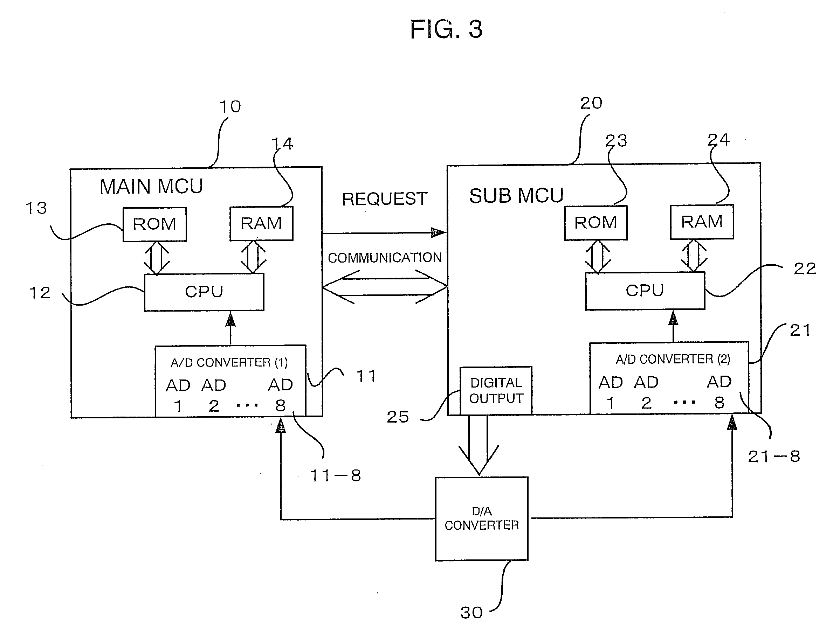

An embodiment of the present invention will be described with reference to FIGs. 3 to 6. FIG. 3 shows a block configuration diagram showing hardware components of the embodiment.

In FIG. 3, a main micro controller unit (MCU) 10 and a sub MCU 20 are connected to each other such that they can communicate. The main MCU 10 comprises an A/D converter 11 associated with the main MCU 10. The A/D converter 11 has eight ports AD11-1, AD11-2, , AD11-8. For example, the port AD11-8 is used for the fault diagnosis and the remaining seven ports from AD11-1 through AD11-7 are not used for the fault diagnosis but control an electric power steering apparatus itself. A main MCU 10 further comprises a CPU 12, a ROM 13 and a RAM 14, both of which are connected to the CPU 12.

On the other hand, the sub MCU 20 comprises an A/D converter 21 associated with the sub MCU 20. The A/D converter 21 has eight ports AD21-1, AD21-2, , AD21-8. For example, the port AD21-8 is used for the fault diagnosis and the remaining seven ports from the ports AD21-1 through AD21-7 are not used for the fault diagnosis. The sub MCU 20 further comprises a CPU 22, a ROM 23 and a RAM 24, both of which are connected to the CPU 22.

Further, a D/A converter 30 is provided separately external to the main MCU 10 and the sub MCU 20. Furthermore, the D/A converter 30 is not necessarily externally provided, it can be incorporated in the sub MCU 20 or the main MCU 10. In addition, for the communication between the main MCU 10 and the sub MCU 20, serial communication or the like is used for transmitting a digital value from the main MCU 10 to the sub MCU 20 almost free from error for the purpose of monitoring the A/D converters 11 and 21.

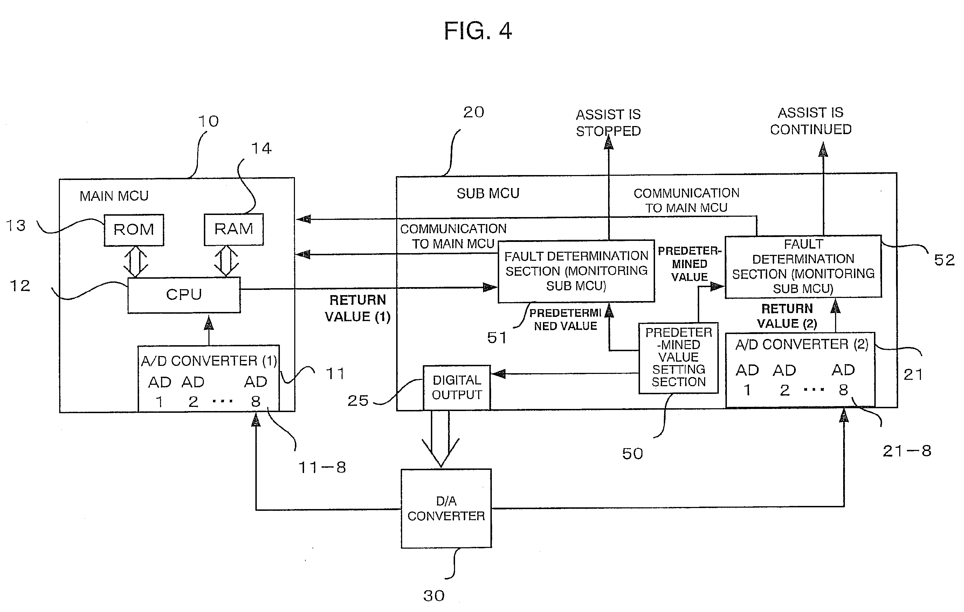

FIG. 4 is a block configuration diagram showing an embodiment in view of functionality to correspond to FIG. 3.

As shown in FIG. 4, the sub MCU 20 has the capabilities provided by a fault determination section 51 for monitoring the A/D converter 11 in the main MCU 10 and the D/A converter 30; a fault determination section 52 for monitoring the A/D converter 21 in the sub MCU 20 and the D/A converter 30; and a predetermined value setting section 50 for setting a predetermined value as a reference value used for the determination. First, a predetermined value set by the predetermined value setting section 50 is outputted as a digital value to the D/A converter 30, and a predetermined value transmitted as the digital value is converted into an analog value by the D/A converter 30. This analog value is transmitted to both the port AD11-8 in the A/D converter 11 and the port AD21-8 in the A/D converter 21.

The analog predetermined value transmitted to the A/D converter 11 is re-converted therein into the digital value, and transmitted via serial communication from the main MCU 10 to the sub MCU 20 as a return value (1). Then, the fault determination section 51 calculates an error ΔX1 between the return value (1) transmitted from the main MCU 10 and a predetermined value from the predetermined value setting section 50, and determines that the A/D converter 11 and the D/A converter 30 are in a normal state if the error ΔX1 is not greater than an allowable value ΔXK which corresponds to an allowable value (1). If the error ΔX1 is greater than the allowable value ΔXK, the fault determination unit 51 diagnoses that a fault state involving the A/D converter 11 or the D/A converter 30 occurs.

On the other hand, the analog predetermined value transmitted to the A/D converter 21 is re-converted into the digital value and transmitted as a return value (2) to the fault determination section 52. Then, the fault determination section 52 calculates an error ΔX2 between a predetermined value directly transmitted from the predetermined value setting section 50 and the return value (2) returned through the D/A converter 30 and the A/D converter 21, and then determines that the A/D converter 21 and the D/A converter 30 are in a normal state if the error ΔX2 is not greater than an allowable value ΔXK, which corresponds to an allowable value (2). If the error ΔX2 is greater than the allowable value ΔXK, the fault determination section 52 diagnoses that a fault state involving the A/D converter 21 or the D/A converter 30 occurs.

In this embodiment, the allowable value (1) and the allowable value (2) of the above embodiment are the allowable value ΔXK, but the allowable values (1) and (2) may be respectively different values.

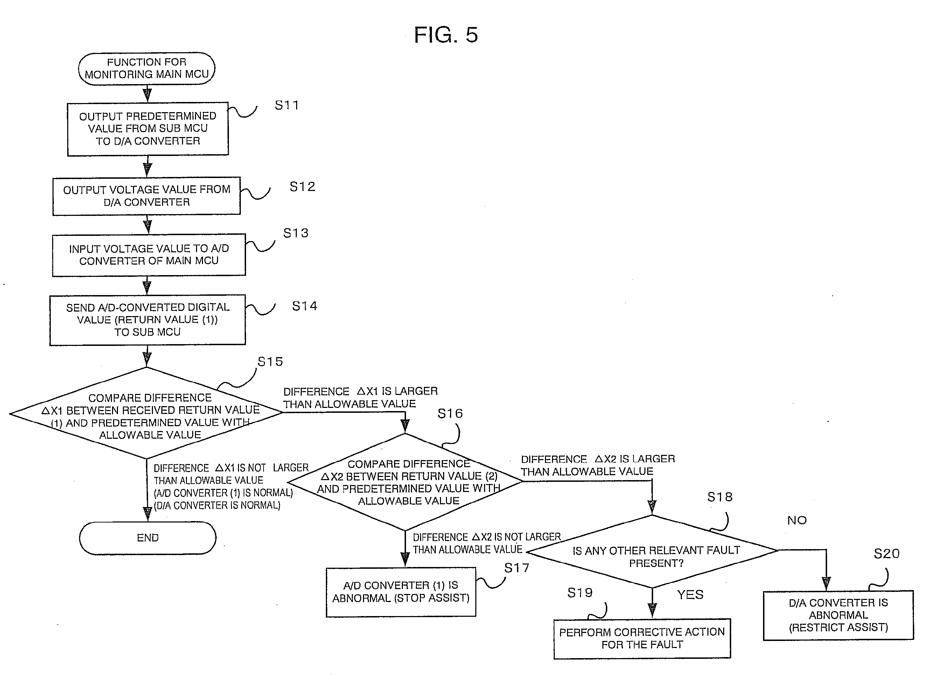

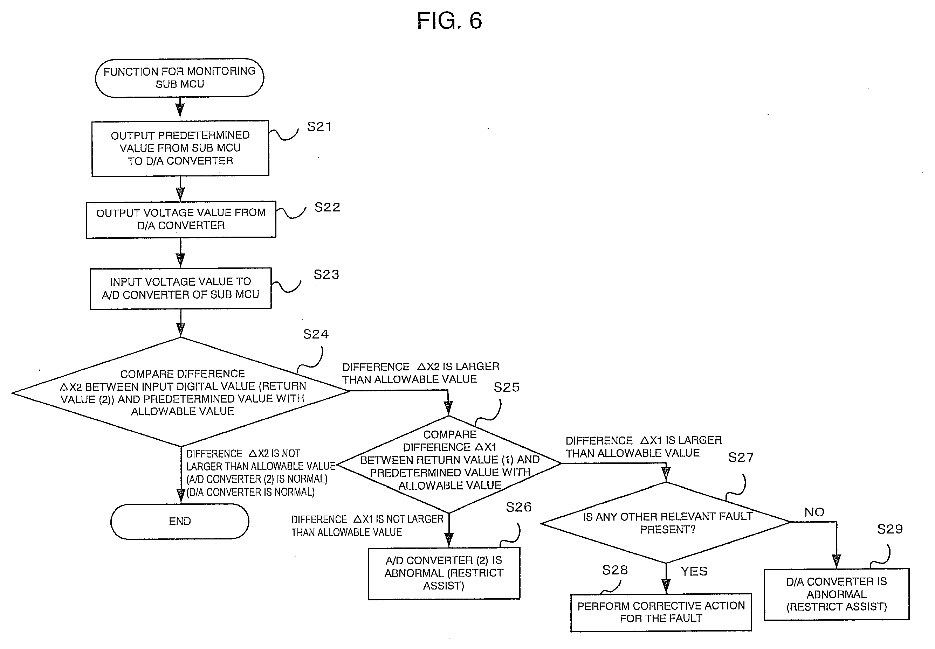

By way of example, when the resolution of a D/A converter 30 is 2 bits, the digital value of a predetermined value is defined as 0 [V] for (0, 0), 1.66 [V] for (1, 0), 3.33 [V] for (0, 1) and 5 [V] for (1,1). The foregoing fault determination (diagnosis) process using a predetermined value and the return values (1) and (2) will be described in detail with reference to flowcharts of FIGs. 5 and 6.

A description will be made first in connection with the fault determination for the A/D converter 11 in the main MCU 10 and the D/A converter 30 with reference to FIG. 5.

In the first place, a predetermined value is transmitted in digital form from the sub MCU 20 to the D/A converter 30 (Step S11). A predetermined value is converted into an analog value and outputted by the D/A converter 30 (Step S12). The outputted analog value is inputted to the port AD11-8 of the A/D converter 11 in the main MCU 10 (Step S13). The analog value is re-converted into a digital value, and the obtained digital value is sent as a return value (1) to the sub MCU 20 by the A/D converter 11 (Step S14). The fault determination section 51 calculates an error ΔX1 between a received return value (1) and a predetermined value provided by a predetermined value setting section 50 and determines whether the error ΔX1 is greater than or not greater than the allowable value ΔXK (Step S15). If the error ΔX1 is not greater than the allowable value ΔXK, it is determined that the A/D converter 11 and the D/A converter 30 are in a normal state.

On the other hand, if the error ΔX1 is greater than the allowable value ΔXK, the comparison result obtained by the fault determination on the A/D converter 21 in the sub MCU 20 (described later) is used for determining whether the A/D converter 11 or the D/A converter 30 is in a fault state. That is, if an error ΔX2 between the return value (2) and a predetermined value is not greater than the allowable value ΔXK, the fact that the D/A converter 30 is in a normal state is presupposed by the error ΔX2 that is not greater than the allowable value ΔXK. Thus, the fault determination section 52 determines whether or not the error ΔX2 is not greater than the allowable value ΔXK (Step S16). If the error ΔX2 is not greater than the allowable value ΔXK, the D/A converter 30 is in a normal state, which indicates that the error ΔX1 greater than the allowable value ΔXK is caused by a fault in the A/D converter 11.

When the A/D converter 11 is in a fault state, a steering assist should be stopped. In other words, since the A/D converter 11 is a very important component for controlling the electric power steering apparatus, it is necessary to stop the steering assist in the event of a fault. For stopping the assist, adequate protection should include shutting off the power from a battery to a motor of the electric power steering apparatus.

On the other hand, when the fault determination section 52 determines whether the error ΔX2 is not greater than the allowable value ΔXK (Step S16) and determines that the error ΔX2, as well as the error ΔX1, are greater than the allowable value ΔXK, there is a high probability that the D/A converter 30 is in a fault state. In this case, however, the presence of another fault regarding the A/D converter 21 (such as a torque sensor fault) is determined (Step S18). If such fault is found, a corrective action adequate for the fault is taken (Step S19). However, if such fault is not found, it is determined that the D/A converter 30 is in a fault state, and a restriction on the steering assist is carried out (Step S20).

The decisive point is when the Step S17 determines that the A/D converter 11 is in a fault state, the assist must be stopped. In contrast, a fault of the D/A converter 30 is not critical for controlling the electric power steering apparatus, for example, to the extent that the fault determination on the A/D converter 11 cannot be performed. Therefore, while the output of the assist is restricted, continuation of the assist is possible. Conventionally, it is impossible to determine which A/D converter is in a fault state or whether or not a D/A converter is in a fault state. As a result, the assist has to stop whenever a fault occurs. In contrast, according to the present invention, a fault part can be located, which enables stopping the assist associated with the fault part or controlling the restriction on the assist.

Hereinafter, the fault determination for the A/D converter 21 in the main MCU 20 and the D/A converter 30 will be described with reference to the flowchart shown in FIG. 6.

First, a predetermined value is transmitted in digital form from the sub MCU 20 to the D/A converter 30 (Step S21), and the D/A converter 30 converts a predetermined value into an analog value and outputs the analog value (Step S22). The outputted analog value is inputted to the port AD21-8 of the A/D converter 21 in the sub MCU 10 (Step S23). The analog value is re-converted into a digital value by the A/D converter 21. The fault determination section 52 calculates the error ΔX2 between the return value (2) returned to the sub MCU 20 and a predetermined value from the predetermined value setting section 50 and determines whether the error ΔX2 is greater than or not greater than the allowable value ΔXK (Step S24). If the error ΔX2 is not greater than the allowable value ΔXK, it is determined that the A/D converter 21 and the D/A converter 30 are in a normal state.

On the other hand, if the error ΔX2 is greater than the allowable value ΔXK, the result of comparison between the return value (1) and a predetermined value obtained by the fault determination section 51 is used for determining whether the A/D converter 21 or the D/A converter 30 is in a fault state. If the error ΔX1 between the return value (1) and the predetermined value is not greater than the allowable value ΔXK, the fact that the D/A converter 30 is in a normal state is presupposed by the error ΔX1 that is not greater than the allowable value ΔXK. Thus, the fault determination section 51 determines whether or not the error ΔX1 is not greater than the allowable value ΔXK (Step S25). If the error ΔX1 is not greater than the allowable value ΔXK, the D/A converter 30 is in a normal state, which indicates that the error ΔX2 greater than the allowable value ΔXK is caused by the fault of the A/D converter 21.

If it is found that the A/D converter 21 is in a fault state, the assist is not stopped but restricted (Step S26). The reason for this is that since the A/D converter 21 is strictly used for the fault determination of the A/D converter and the D/A converter, it is not essential for controlling the electric power steering apparatus. Accordingly, the continuation of the assist is possible, although a restriction on the assist is carried out.

Further, the sub MCU 20 is not only used for the fault diagnosis of the A/D converter and the D/A converter, but is also of course used for the fault diagnosis of a sensor, such as a torque sensor or a vehicle speed sensor, by comparing a value measured by the main MCU 10 and a value measured by the sub MCU 20.

As described above, according to the present invention, it is possible to determine which A/D converter is in a fault state, and whether or not a D/A converter is in a fault state. Therefore, a fault part can be located, as a result of which whether the assist is stopped or continued can be selected.

Furthermore, according to the present invention, the sub MCU is used for the fault diagnosis of an A/D converter and a D/A converter. Therefore, the load of the fault diagnosis placed on the main MCU is small, and the fault diagnosis can be performed even for a moving vehicle without affecting the control of an electric power steering apparatus. This has the advantage that the fault diagnosis can be performed during engine start when less influence is exerted on the control of the electric power steering apparatus, for example, when an ignition key is turned on.

According to the present invention, the sub MCU and an A/D converter (2) with the sub MCU are used for the fault diagnosis of an A/D converter (1), A/D converter (2) and a D/A converter, whereby the apparatus structure can be reduced in cost, a fault part can be identified as to whether the A/D converter (1) or the A/D converter (2) or the D/A converter is in a fault state. This ability to identify the fault part determines whether the application of a steering assistance force should be stopped or continued.

### INDUSTRIAL APPLICABILITY

According to the present invention, the fault diagnosis places a lower load on a main MCU and an A/D converter with a main MCU. A main MCU and an A/D converter with a main MCU can concentrate on controlling an electric power steering apparatus and can correspondingly realize effective control at lower cost. This is applicable to high-performance electric power steering for automobiles or other vehicles.

## Claims

1. A controller for an electric power steering apparatus applying a steering assist force by a motor to a steering system of a vehicle, and the controller comprising a main MCU with an A/D converter (1), a sub MCU with an A/D converter (2), and a D/A converter, wherein the sub MCU outputs a predetermined value to the D/A converter, an error between a predetermined value and a return value (1) obtained by transmitting a predetermined value to the sub MCU through the D/A converter and the A/D converter (1) are compared in the sub MCU, while an error between a predetermined value and a return value (2) obtained by transmitting a predetermined value to the sub MCU through the D/A converter and the A/D converter (2) are compared in the sub MCU, based on which a fault diagnosis is performed on the A/D converter (1), the A/D converter (2) and the D/A converter.

2. A controller for an electric power steering apparatus according to claim 1, wherein the A/D converter (1) is diagnosed as in a fault state, and application of the steering assist force is stopped.

3. A controller for an electric power steering apparatus according to claim 1, wherein the A/D converter (2) or the D/A converter is diagnosed as in a fault state, and application of the steering assist force is continued.

4. A controller for an electric power steering apparatus according to any one of claims 1 to 3, wherein the return value (1) is transmitted from the main MCU to the sub MCU via a serial communication.

5. A controller for an electric power steering apparatus according to claim 1, wherein a D/A converter is provided external to the main MCU and the sub MCU.

6. A controller for an electric power steering apparatus according to claim 1, wherein the D/A converter is provided inside of the sub MCU.
